# EUROPEAN PATENT SPECIFICATION

(11) **EP 2 246 141 B1**
(45) Date of publication and mention of the grant of the patent: **21.12.2011**
(21) Application number: 10160330.6
(22) Date of filing: 19.04.2010
(51) Int. Cl.: B23K 11/26, B23K 26/28, F28F 9/26, B23K 101/14

(54) **Method for manufacturing a tubular radiator**
Verfahren zur Herstellung eines Röhrenradiator
Méthode de production de radiateur à tubes

(30) Priority: 30.04.2009 IT MI20090734
(43) Date of publication of application: 03.11.2010
(73) Proprietor: DL Radiators S.p.A., 31100 Treviso (IT)
(72) Inventor: De' Longhi, Giuseppe, 31100, TREVISO (IT)
(74) Representative: Rapisardi, Mariacristina

(56) References cited:
- EP-A1- 0 644 393

## Description

The present invention relates to a method for manufacturing a tubular radiator according to the preamble of claim 1. EP 0 644 393 A discloses such a method. A tubular radiator comprises a plurality of adjacent radiating elements, each comprising a tube having, at each of the ends thereof, a head consisting of two half-shells.

A traditional manufacturing method consists in assembling the constituting parts of each radiating element to then combine the radiating elements in a series.

In particular, to make a radiating element, a laser welding is first carried out on the two half shells making up the heads, and then a capacitor discharge welding of the two heads thus obtained with the pipe is carried out.

The prior art teaches that both laser welding and capacitor discharge welding must be substantially burr-free.

Such welds, however, are little effective as they exhibit a poor mechanical resistance and do not ensure the hydraulic seal.

To obviate such drawback it has been proposed to increase the sheet thickness for making the heads and the tube of the radiating element, but if on the one side this has at least partly solved the problem of mechanical and hydraulic seal of the welds, on the other hand it has caused an excessive increase of the weight and costs for procuring the raw material, and the further complication of logistics for transporting and storing heavier parts.

EP 0 644 393 A discloses a tube radiator consisting of a plurality of radiator elements which are arranged next to one another and are respectively assembled from two end pieces, which consist of half shells welded to one another and are provided with pipe adaptors (tube adaptors), and from a plurality of pipes welded in between the end pieces

The technical task of the present invention therefore is to provide a method for manufacturing a tubular radiator and a tubular radiator which allow eliminating the aforementioned technical drawbacks of the prior art. Within the scope of this technical task, an object of the invention is to provide a method for manufacturing a tubular radiator which provides a tubular radiator with the requirements of hydraulic and mechanical seal with considerably reduced costs. Another object of the invention is to have a tubular radiator that has the requirements of hydraulic and mechanical seal while enhancing its aesthetics as well. The technical task, as well as these and other objects, according to the present invention are achieved by providing a method for manufacturing a tubular radiator according to claim 1. The invention teaches the execution of a welding with formation of burr as it in an indication of interpenetration between the welded materials and consequently it ensures the mechanical and hydraulic seal, also with a thin thickness of sheet of the parts that are coupled.

Further features of the present invention are further defined in the following claims.

Further features and advantages of the invention will appear more clearly from the description of a preferred but non-exclusive embodiment of the method for manufacturing a tubular radiator according to the invention, illustrated by way of a non-limiting example in the annexed drawings, wherein:
- figure 1 shows a front view of a tubular radiator obtained by a process according to the present invention;
- figure 2 shows a side view of the tubular radiator of figure 1; and figure 3 shows an axial cutaway view of the coupling zone between the tube and the head of a radiating element prior to welding.

With reference to the figures mentioned above, there is shown a tubular radiator globally indicated with reference numeral 1.

The tubular radiator 1 comprises a plurality of adjacent radiating elements 9 hydraulically connected in a series.

Each radiating element 9 in turn comprises a tube 2 having a head 3, 4 at each of the ends thereof.

Each head 3, 4 in turn consists of two half shells 3a, 3b and 4a, 4b.

The two half shells 3a, 3b of head 3 are coupled along the external contact edge 5 thereof, and the two half shells 4a, 4b of head 4 are as well coupled along the external contact edge 6 thereof. Head 3 and tube 2 are coupled along the external contact edge 7 thereof and head 4 and tube 2 are as well coupled along the external contact edge 8.

Each head 3, 4 laterally has unions10, 11 for connecting the radiating element 9 to the adjacent upstream and/or downstream one.

In particular, the adjacent side unions 10, 11 of each pair of adjacent radiating elements 9 are coupled along the external contact edge 12 thereof.

A fundamental aspect of the invention is that the two half shells 3a, 3b and respectively the two half shells 4a, 4b are coupled for forming head 3 and respectively 4, through laser welding carried out with burr forming at least on the outside, and preferably inside too, at the external contact edge 5 and respectively 6 thereof.

The laser welding carried out with burr forming ensures the perfect coupling between the parts to be welded 3a, 3b and respectively 4a, 4b and consequently an effective coupling with hydraulic and mechanical seal.

In particular, the laser welding is especially calibrated so as to be a little out of focus for creating a burr indication of the occurrence of interpenetration between the materials of the two half shells. Moreover, the laser welding is carried out by exerting a suitable contact pressure for optimising the interpenetration between the materials of the two half shells.

The burr generated by the laser welding is removed to prevent unaesthetic gaps from forming.

Moreover, each head 3 and respectively 4 is coupled to tube 2 through capacitor discharge welding by exerting a contact pressure suitable for the interpenetration between the materials of each head 3 and respectively 4 of tube 2 with forming of inside and outside burr at the external contact edge 7 and respectively 8 thereof, so as to ensure an effective hydraulically and mechanically sealed coupling. Also in this case, the burr generated by the discharge welding is removed to prevent unaesthetic gaps from forming. In particular, laser welding is carried out with a welding passage on the outer side of the external contact edge 5 and respectively 6 of half shells 3a, 3b and respectively 4a, 4b. During the laser welding, the laser dispensing nozzle is stationary while head 3, 4 is moved, which carries a rotary-translation for keeping substantially always the same distance and orthogonality relative to the focusing point of the laser dispensing nozzle.

During the execution of both the laser welding and the capacitor discharge welding, the contact pressure between the parts to be welded is advantageously proportional to the welding intensity and speed.

In any case, such contact pressure is comprised between about 1x10⁵ N and 2x10⁵ N for the capacitor discharge and not higher than about 1x10⁴N for laser welding.

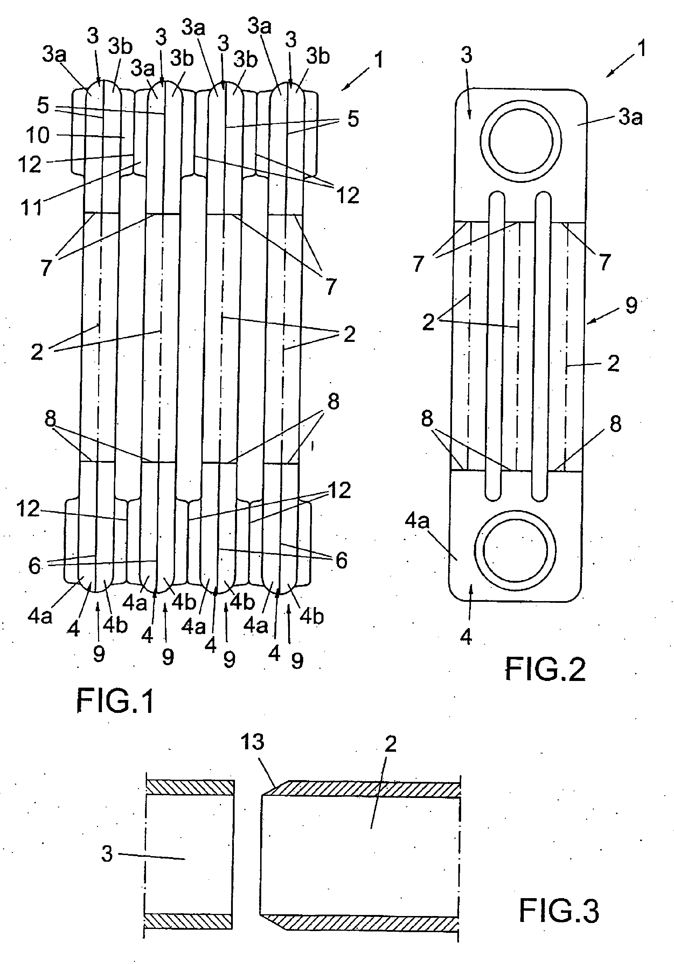

With reference to the capacitor discharge welding, it should be noted that advantageously, the ends of tube 2 are processed, in particular tapered before welding heads 3, 4, as shown in figure 3 wherein the tapered head of tube 2 is indicated with reference numeral 13.

Such process for removing material from the ends of tube 2 is carried out by blade. Alternatively or in addition to the ends of tube 2, also heads 3, 4, in particular the fingers of heads 3, 4 may be tapered prior to welding. The thickness reduction of tube 2 at the ends thereof is particularly advantageous since in the first place it allows bringing tube 2 to a standard reference length so that none of tubes 2 of radiator 1 exhibits length differences, in the second place it facilitates the melting of materials during the discharge welding, improving the interpenetration thereof.

After the laser welding of half shells 3a, 3b and respectively 4a, 4b the raw heads 3 and respectively 4 are let to cool and once cooled, the burr is mechanically removed.

The mechanical removal of the burr from the coupling zone of the half shells of heads 3, 4 provides for a smoothing step by means of abrasive material.

The mechanical removal of the burr from the coupling zone of heads 3, 4 to tube 2, on the other hand, provides for a roughing step by means of knife planning, and one or more progressive finishing steps through smoothing by means of abrasive material. The quality of the hydraulic and mechanical seal obtained by this process allows using the sheet with a very reduced thickness for manufacturing the radiating elements 9 of radiator 1.

In particular, it is possible to use a sheet thickness equal to 1.2 mm ± 20% which is already sufficient to provide the required mechanical resistance to radiator 1.

The use of sheet with a reduced thickness is advantageous also because it reduces the production of fume and sparks during welding and the amount of scrap produced, especially inside the radiator where they may clog the boiler exchanger, as well as the valves etc.

After the manufacture of the radiating elements 2, in order to assemble radiator 1, the radiating elements 9 are coupled to one another by a traditional welding between unions 10 and 11 of heads 3 and 4 of the adjacent radiating elements 9.

The present invention completely reverses a prejudice of the prior art of considering the welding burr as a defect, on the contrary the welding burr being desired as it is an indication of the occurrence of interpenetration between the welded materials, capable of ensuring an effective hydraulic and mechanical seal also if sheets with a reduced thickness are used. The present invention also allows obtaining an aesthetically very remarkable radiator.

## Claims

1. Method for manufacturing a tubular radiator (1) of the type comprising a plurality of adjacent radiating elements (9) each comprising a tube (2) having, at each of the ends thereof, a head (3 and 4) consisting of two half shells (3a, 3b, and 4a, 4b), **characterized in that** the two half shells (3a, 3b and 4a, 4b) are coupled by laser welding with forming of burr at least on the outside at the external contact edge (5, 6) thereof, so as to ensure an interpenetration of material for having an effective hydraulically and mechanically sealed coupling, and **in that** each head (3, 4) is coupled to said tube (2) by capacitor discharge welding by exerting a contact pressure suitable for the interpenetration between the materials of each head (3, 4) and of said tube (2) with forming of inside and outside burr at the external contact edge (7, 8) thereof so as to ensure an effective hydraulically and mechanically sealed coupling.

2. Method for manufacturing a tubular radiator (1) according to claim 1, **characterized in that** said laser welding is calibrated so as to be slightly out of focus for creating said burr.

3. Method for manufacturing a tubular radiator according to one or more of the previous claims, **characterized in that** the contact pressure between the two half shells (3a, 3b and 4a, 4b) for executing said laser welding and between each head (3, 4) and said tube (2) for executing said discharge welding is proportional to the welding speed and intensity.

4. Method for manufacturing a tubular radiator according to one or more of the previous claims, **characterized in that** said contact pressure for said discharge welding is comprised between 1x10⁵ N and 2x10⁵ N, and the contact pressure between said two half shells (3a, 3b and 4a, 4b) for laser welding is not higher than 1x10⁴ N.

5. Method for manufacturing a tubular radiator according to one or more of the previous claims, **characterized in that** said laser welding is carried out with a welding passage on the outer side of said external contact edge (5, 6), wherein the nozzle dispensing said laser is stationary while said head (3, 4) is moved, which carries out a rotary-translation for keeping substantially always the same distance and orthogonality relative to the focusing point of said laser dispensing nozzle.

6. Method for manufacturing a tubular radiator according to one or more of the previous claims, **characterized in that** the ends of said tube (2) and/or said heads (3, 4) are tapered prior to said capacitor discharge welding.

7. Method for manufacturing a tubular radiator according to one or more of the previous claims, **characterized in that** it provides for an operation of mechanical removal of said burr.

8. Method for manufacturing a tubular radiator according to one or more of the previous claims, **characterized in that** said operation of mechanical removal of said burr comprises, for said laser welding, a smoothing step through abrasive.

9. Method for manufacturing a tubular radiator according to one or more of the previous claims, **characterized in that** said operation of mechanical removal of said burr comprises, for said capacitor discharge welding, a knife roughing step and one or more progressive finishing steps through smoothing by abrasive material.

10. Method for manufacturing a tubular radiator according to one or more of the previous claims, **characterized in that** it uses a reduced sheet thickness for making said tube(2) and said heads (3, 4) equal to 1.2 mm ± 20%.

## Patentansprüche

1. Verfahren zur Herstellung eines Röhrenradiators (1) des Typs umfassend eine Vielzahl von aneinandergrenzenden Strahlungselementen (9), jedes umfassend ein Rohr (2), das an jeweils jedem Ende einen Kopf (3 und 4), bestehend aus zwei Halbschalen (3a, 3b und 4a, 4b), besitzt, **dadurch gekennzeichnet, dass** die zwei Halbschalen (3a, 3b und 4a, 4b) durch Laserschweißen mit Gratbildung mindestens an der Außenseite der jeweiligen externen Kontaktränder (5, 6) verbunden sind, sodass ein gegenseitiges Durchdringen von Material gewährleistet wird, um eine wirkungsvolle hydraulisch und mechanisch abgedichtete Verbindung entstehen zu lassen, und **dadurch**, dass jeder Kopf (3, 4) mit dem genannten Rohr (2) durch Kondensatorentladungsschweißen verbunden ist, wobei ein Kontaktdruck ausgeübt wird, der für das gegenseitige Durchdringen zwischen den Materialien jedes Kopfs (3, 4) und des genannten Rohrs (2) geeignet ist, und wobei ein Innen- und Außengrat am jeweiligen externen Kontaktrand (7, 8) gebildet wird, sodass eine wirkungsvolle hydraulisch und mechanisch abgedichtete Verbindung gewährleistet wird.

2. Verfahren zur Herstellung eines Röhrenradiators (1) nach Anspruch 1, **dadurch gekennzeichnet, dass** das genannte Laserschweißen so eingestellt ist, dass es geringfügig außer Fokus ist, um den genannten Grat zu erzeugen.

3. Verfahren zur Herstellung eines Röhrenradiators nach einem oder mehreren der vorhergehenden Ansprüche, **dadurch gekennzeichnet, dass** der Kontaktdruck zwischen den zwei Halbschalen (3a, 3b und 4a, 4b) zur Ausführung des genannten Laserschweißens und zwischen jedem Kopf (3, 4) und dem genannten Rohr (2) zur Ausführung des genannten Entladungsschweißens proportional zur Schweißgeschwindigkeit und - stärke ist.

4. Verfahren zur Herstellung eines Röhrenradiators nach einem oder mehreren der vorhergehenden Ansprüche, **dadurch gekennzeichnet, dass** der genannte Kontaktdruck für das genannte Entladungsschweißen zwischen 1x10⁵ N und 2x10⁵ N beträgt, und dass der Kontaktdruck zwischen den genannten zwei Halbschalen (3a, 3b und 4a, 4b) für das Laserschweißen nicht höher als 1x10⁴ N ist.

5. Verfahren zur Herstellung eines Röhrenradiators nach einem oder mehreren der vorhergehenden Ansprüche, **dadurch gekennzeichnet, dass** das genannte Laserschweißen mit einem Schweißdurchgang an der Außenseite des genannten externen Kontaktrands (5, 6) ausgeführt wird, wobei die Düse, die den genannten Laserstrahl abgibt, stationär ist, während der genannte Kopf (3, 4) bewegt wird und eine Drehschiebebewegung ausführt, um im Wesentlichen stets denselben Abstand und dieselbe Orthogonalität zum Fokuspunkt der genannten Laserstrahlendüse beizubehalten.

6. Verfahren zur Herstellung eines Röhrenradiators nach einem oder mehreren der vorhergehenden Ansprüche, **dadurch gekennzeichnet, dass** die Enden des genannten Rohrs (2) und/oder der genannten Köpfe (3, 4) vor dem genannten Kondensatorentladungsschweißen abgeschrägt werden.

7. Verfahren zur Herstellung eines Röhrenradiators nach einem oder mehreren der vorhergehenden Ansprüche, **dadurch gekennzeichnet, dass** es einen Vorgang zum mechanischen Entfernen des genannten Grats zur Verfügung stellt.

8. Verfahren zur Herstellung eines Röhrenradiators nach einem oder mehreren der vorhergehenden Ansprüche, **dadurch gekennzeichnet, dass** der genannte Vorgang zum mechanischen Entfernen des genannten Grats beim genannten Laserschweißen eine Phase des Schleifens mit Schleifmittel umfasst.

9. Verfahren zur Herstellung eines Röhrenradiators nach einem oder mehreren der vorhergehenden Ansprüche, **dadurch gekennzeichnet, dass** der genannte Vorgang zum mechanischen Entfernen des genannten Grats beim genannten Kondensatorentladungsschweißens eine Phase zum Aufrauen mittels eines Messers und eine oder mehrere progressive Bearbeitungsphasen mittels Schleifen mit Schleifmaterial umfasst.

10. Verfahren zur Herstellung eines Röhrenradiators nach einem oder mehreren der vorhergehenden Ansprüche, **dadurch gekennzeichnet, dass** eine reduzierte Blechdicke zur Herstellung des genannten Rohrs (2) und der genannten Köpfe (3, 4) eingesetzt wird, gleich 1,2 mm ± 20 %.

## Revendications

1. Méthode de production de radiateur à tubes (1) du type comprenant une pluralité d'éléments rayonnants adjacents (9), comprenant chacun un tube (2) présentant, à chacune de ses extrémités, une tête (3 et 4) composée de deux demi-coques (3a, 3b, et 4a, 4b), **caractérisée en ce que** les deux demi-coques (3a, 3b et 4a, 4b) sont accouplées par soudage au laser avec formation de bavure au moins sur l'extérieur, au niveau du bord de contact externe (5, 6), de manière à garantir une interpénétration de matière pour avoir un efficace accouplement hydrauliquement et mécaniquement étanche, et **en ce que** chaque tête (3, 4) est accouplée avec ledit tube (2) par soudage par décharge de condensateur en exerçant une pression de contact appropriée pour l'interpénétration entre les matières de chaque tête (3, 4) et dudit tube (2) avec formation d'une bavure intérieure et extérieure, au niveau du bord de contact externe (7, 8), de manière à garantir un efficace accouplement hydrauliquement et mécaniquement étanche.

2. Méthode de production de radiateur à tubes (1) selon la revendication 1, **caractérisée en ce que** ledit soudage au laser est calibré pour être légèrement imprécis et créer ladite bavure.

3. Méthode de production de radiateur à tubes selon l'une ou plusieurs des revendications précédentes, **caractérisée en ce que** la pression de contact entre les deux demi-coques (3a, 3b et 4a, 4b) pour effectuer ledit soudage au laser, et entre chaque tête (3, 4) et ledit tube (2) pour effectuer ledit soudage par décharge, est proportionnelle à la vitesse et à l'intensité de soudage.

4. Méthode de production de radiateur à tubes selon l'une ou plusieurs des revendications précédentes, **caractérisée en ce que** ladite pression de contact pour ledit soudage par décharge, est comprise entre 1x10⁵ N et 2x10⁵ N, et la pression de contact entre lesdites deux demi-coques (3a, 3b et 4a, 4b) pour le soudage au laser n'est pas supérieure à 1x10⁴ N.

5. Méthode de production d'un radiateur à tubes selon l'une ou plusieurs des revendications précédentes, **caractérisée en ce que** ledit soudage au laser est réalisé avec un passage de soudure sur le côté extérieur dudit bord de contact externe (5, 6), où la buse émanant ledit laser est immobile, et ladite tête (3, 4) est mobile, effectuant une translation par rotation pour toujours garder essentiellement la même distance et rester orthogonale au point de centrage de ladite buse à jet laser.

6. Méthode de production de radiateur à tubes selon l'une ou plusieurs des revendications précédentes, **caractérisée en ce que** les extrémités dudit tube (2) et/ou lesdites têtes (3, 4) sont taillées en pointe avant ledit soudage par décharge de condensateur.

7. Méthode de production de radiateur à tubes selon l'une ou plusieurs des revendications précédentes, **caractérisée en ce qu'**elle prévoit une opération d'élimination mécanique de ladite bavure.

8. Méthode de production de radiateur à tubes selon l'une ou plusieurs des revendications précédentes, **caractérisée en ce que** ladite opération d'élimination mécanique de ladite bavure comprend, pour ledit soudage au laser, une étape de ponçage par abrasif.

9. Méthode de production de radiateur à tubes selon l'une ou plusieurs des revendications précédentes, **caractérisée en ce que** ladite opération d'élimination mécanique de ladite bavure comprend, pour ledit soudage par décharge de condensateur, une étape de dégrossissage à la lame et une ou plusieurs étapes de finition progressive via ponçage par matériel abrasif.

10. Méthode de production de radiateur à tubes selon l'une ou plusieurs des revendications précédentes, **caractérisée en ce qu'**elle utilise une épaisseur réduite de tôle pour fabriquer ledit tube (2) et lesdites têtes (3, 4), égale à 1,2 mm ± 20%.
